# EUROPÄISCHE PATENTSCHRIFT

(11) **EP 0 417 546 B1**
(45) Veröffentlichungstag und Bekanntmachung des Hinweises auf die Patenterteilung: **12.10.1994**
(21) Anmeldenummer: 90116555.5
(22) Anmeldetag: 29.08.1990
(51) Int. Cl.: B23K 35/368

(54) **Basische Metall-Kernelektrode**
Basic metal core electrode
Electrode basique à âme métallique

(30) Priorität: 11.09.1989 US 405727
(43) Veröffentlichungstag der Anmeldung: 20.03.1991
(73) Patentinhaber: THE LINCOLN ELECTRIC COMPANY, Cleveland, Ohio 44117-1199 (US)
(72) Erfinder: Chai, Chang-Shung, Highland Heights, Ohio 44143 (US); Fink, David A., University Heights, Ohio 44118 (US); Gonzalez, John, Willoughby, Ohio 44094 (US)
(74) Vertreter: Vollbach, Hans, Dipl.-Ing.

(56) Entgegenhaltungen:
- DE-A- 2 164 892
- DE-B- 1 190 597
- US-A- 3 868 487
- US-A- 4 071 734
- PATENT ABSTRACTS OF JAPAN, Band 9, Nr. 38 (M-358)[1761], 19. Februar 1985; & JP-A-59179295 (SUMITOMO KINZOKU KOGYO)
- PATENT ABSTRACTS OF JAPAN, Band 7, Nr. 291 (M-265)[1436], 27. Dezember 1983;& JP-A-58 163 594 (SUMITOMO KINZOKU KOGYO)
- AUTOMATIC WELDING, Band 38, Nr. 1, Januar 1985, Seiten 41-43; V.V. CHIGAREV etal.: "A fluoroplastic material in flux-cored strip to reduce the hydrogencontent of deposited metal"

## Beschreibung

Die Erfindung betrifft ein abschmelzendes Schweißelement zum Lichtbogenschweißen, insbesondere von hochfesten Metallen, mit einem Stahlmantel, der ein verdichtetes Kernmaterial umschließt, das ein Flußmittel enthält.

Die Erfindung betrifft insbesondere ein abschmelzendes Schweißelement, das als Schweißzusatz bzw. Zusatzmetall beim TIG-Schweißen (Inertschutzgas-Lichtbogenschweißen) oder als abschmelzende Elektrode beim MIG-Schweißen verwendet werden kann, und zwar bevorzugt beim MIG-Schweißen hochfester Metalle derjenigen Art, wie sie in bestimmten militärischen und industriellen Anwendungsbereichen gefordert werden. Die Erfindung wird im Zusammenhang mit diesem Anwendungsbereich erläutert, wobei diese Erläuterung aber für alle Anwendungsbereiche der Erfindung Geltung hat.

Beim elektrischen Lichtbogenschweißen wird ein Metalldraht, der eine abschmelzende Elektrode bildet, unter Lichtbogenbildung gegen das Werkstück vorgeschoben, wobei das Ende des Drahtes bzw. der Elektrode zur Ablagerung von Metall auf dem Werkstück aufgeschmolzen wird. Die Elektroden für dieses MIG-Schweißverfahren weisen in ihrer Zusammensetzung einen hohen Entwicklungsstand auf.

Die Zusammensetzung der Elektrode, das System an Flußmittel bzw. Zusatzmaterial, die Art des elektrischen Stromes, das Schutzgas und weitere Faktoren werden auf die jeweils gewünschten Schweißaufgaben eingestellt und abgestimmt. Eine Hauptaufgabe bei jedem Lichtbogenschweißprozeß besteht in der Erreichung einer hohen Abschmelzleistung, die beim MIG-Verfahren im allgemeinen für das Schweißen in der Vertikalebene größer ist als etwa 2,25 kg/h. Das sich einstellende Schweißmetall muß eine gute Schweißraupenbildung, eine geringe Schlackenbildung auf der Schweißraupe und weitere physikalische Eigenschaften aufweisen, um den Arbeitsaufwand für das Reinigen der Schweißnaht nach erfolgten Schweißvorgang möglichst gering zu halten. Außerdem soll das Schweißmetall bzw. die Schweißraupe nur eine geringe Tendenz zur Schweißrissigkeit haben und eine hohe Schlagfestigkeit bzw. Kerbschlagzähigkeit (gemessen z.B. als Charpy-Schlagfestigkeit) aufweisen. Außerdem ist es wünschenswert, wenn die Schweißelektrode nicht nur für die waagerechte Schweißposition mit Schweißen von oben, sondern auch für andere Schweißpositionen, also für das nicht-gerichtete Schweißen oder Außer-Positionsschweißen verwendet werden kann. Das Schweißen von hochfesten Stählen, beispielsweise von Stählen, wie sie im militärischen Bereich eingesetzt werden und wie sie den militärischen Richtlinien HY-80, HY-100 und selbst HY-130 entsprechen, stellt hohe Ansprüche und bereitet bei zunehmender Festigkeit des zu schweißenden Materials immer größere Probleme im Bezug auf geringe Rißbildung und hohe Schlagfestigkeit, wenn die Möglichkeit gewahrt bleiben soll, auch beim nicht-gerichteten Schweißen mit hohen Abschmelzleistungen zu arbeiten. Normalerweise werden zum Schweißen derartiger Stähle massive Metalldrahtelektroden verwendet. Dies begrenzt beim AußerPositions-Schweißen die Anschmelzleistung auf etwa 2,7 kg/h, die nur mit bestimmten elektrischen Impuls-Schweißmethoden erreichbar ist. Darüber hinaus ist das Schweißen mit massiven Metalldrahtelektroden außergewöhnlich schwierig und erfordert ein Vorwärmen des Werkstücks. Außerdem muß die massive Elektrode die erforderlichen Legierungsbestandteile in exakter Zusammensetzung enthalten. Die genaue Herstellung solcher Elektroden ist eine schwierige metallurgische Aufgabe.

In der Schweißindustrie ist die Verwendung von Kern- bzw. Seelenelektroden für das MIG-Schweißen allgemein üblich. Mit diesen Elektroden läßt sich das Problem der exakten Zusammensetzung der in der Elektrode enthaltenen Legierungsbestandteile dadurch vermeiden, daß die Legierungsmetalle in sehr genauen Anteilen im Kern- bzw. Füllinhalt vorgesehen werden, um die gewünschten Legierungseigenschaften und -anteile im entsprechenden Schweißmetall zu enthalten. Bislang war jedoch das Schweißen von hochfesten Stählen mit Metallkern- bzw. Seelenelektroden im MIG-Verfahren nicht möglich, da die Flußmittel von bekannten, derartigen Elektroden den Sauerstoffgehalt und den Gehalt an diffundierbarem Wasserstoff im Schweißmetall erhöhen. Bekannte Kern- bzw. Seelenelektroden haben darüber hinaus den Nachteil, daß die Menge an Wasserstoff, die sich im Schweißmetall findet, insbesondere dann zu hoch ist, wenn der elektrische Elektrodenüberstand beim Schweißen nicht optimal eingestellt ist, sondern von seiner Sollage abweicht. Dieser Nachteil ist auf Feuchtigkeit im Elektrodenkern und in der Mantelnaht sowie auf Feuchtigkeit in dem die Elektrode übergebenden Schutzgas zurückzuführen. Kern- bzw. Seelenelektroden wurden bislang nicht allgemein bei Impuls-Schweißverfahren eingesetzt, wie dies beim Schweißen hochfester Stähle in Außer-Schweißposition vorgesehen wird.

Eine übliche Flußmittel-Kernelektrode weist ein Titan-Dioxyd-Flußmittelsystem als Pulver im Kern auf, der von einem niedrig gekohlten Stahlmantel umschlossen ist. Solche Elektroden ermöglichen zwar ein gutes Schweißen mit hohen Abschmelzleistungen bis zu 3,6 kg/h und können auch für das Schweißen in Außer-Schweißposition eingesetzt werden. Beim Einsatz dieser Elektroden ergibt sich jedoch ein erhöhter Gehalt an diffundierbarem Wasserstoff im Schweißmetall, der größer ist als dies selbst bei einem HY-80-Stahl noch hingenommen werden kann. Außerdem ist der Sauerstoffanteil im Schweißmetall verhältnismäßig hoch, so daß dieses eine niedrige Charpy-Festigkeit hat. Aufgrund dessen wird eine derartige Stahl-Kernelektrode mit einem üblichen Titandioxyd-Flußmittelsystem zwar vom Schweißer gerne verwendet; das sich bildende Schweißmetall weist aber Sauerstoff und Wasserstoff in Anteilen auf, die für die meisten hochfesten Stähle nicht hingenommen werden können.

Aufgrund der hohen Qualität und der hohen Anschmelzleistungen, die mit anderen Elektroden mit Flußmittelkern erreichbar sind, wurde angeregt, eine basische Flußmittel-Kernelektrode einzusetzen, die basische Zusammensetzungen, wie Calciumfluorid, verwendet. Diese Elektroden erzeugen zwar eine gute Schlagfestigkeit, da der Fluor die Eigenschaft hat, den Sauerstoff aus dem Schweißmetall zu entfernen bzw. zu spülen; sie können jedoch nicht für das Schweißen in Außer-Schweißposition zufriedenstellend eingesetzt werden und werden vom Schweißer nicht gerne verwendet, da ihr Einsatz auf das Schweißen von oben beschränkt ist.

Aus der JP-A 59 179 295 ist es bekannt, in einer Seelenelektrode ein Flußmittel vorzusehen, das aus Calciumfluorid, Bariumfluorid oder Natriumfluorid bzw. einer Kombination dieser Stoffe besteht und dessen Anteil mindestens 50 Gew.% des gesamten Kernmaterials ausmacht. Zusätzlich enthält der Elektrodenkern bei dieser Elektrode auch 1% bis 10% Zink. Diese bekannte Elektrode dient dazu, die Schlacke am Boden des Schmelzbads auf einem niedrigen Schmelzpunkt zu halten und ein schnelles Schweißen, insbesondere von dünnwandigen Rohren großen Durchmessers zu ermöglichen. Durch den geringen Schmelzpunkt des Flußmittels soll der Schlackeneinschluß im Metall vermieden werden. Der beim Schweißen entstehende Zink-Metalldampf setzt den Partialdruck vom Wasserstoff herab und verringert die Menge an diffundierbarem Wasserstoff im Schmelzbad.

Mit dieser bekannten Elektrode kann jedoch die gewünschte Schweißnahtgüte mit hoher Anschmelzleistung der Elektrode beim Schweißen hochfesten Stahls nicht erreicht werden. Auch kann diese bekannte Elektrode nicht beim Schweißen in Außer-Schweißposition verwendet werden.

Aus der DE-B 1 1890 597 ist ein Verfahren zum Elektroschweißen von Metallen mit Schweißelektroden bekannt, deren Schweißhilfsmittel in eine Elektrodenummantelung eingebunden sind und die aus anorganischen pulverförmigen Oxyden und/oder Fluoriden, beispielsweise Calciumfluorid, bestehen können. Die fluoridhaltigen Schweißmittel werden dabei in Form von fluorierten Kohlenwasserstoffen verwendet und hierzu als Monomere und Polymere in die Umhüllungsmasse von Elektroden eingebracht. Auch mit diesem bekannten Verfahren ist es nicht möglich, den Sauerstoff- und Wasserstoffgehalt auf die beim Schweißen von hochfestem Stahl erforderlichen geringen Werte zu beschränken und das Werkstück auch in Außer-Schweißposition zu schweißen. Auch können mit diesen bekannten Verfahren die gewünschten hohen Abschmelzleistungen nicht erzielt werden.

Aus der US-PS 3 868 487 ist eine Seelenelektrode bekanntgeworden, deren Kernfüllung Calciumfluorid in einer Menge zwischen 25% und 98% enthält. Darüber hinaus enthält das Flußmittel bei dieser Elektrode auch noch Calziumkarbonat, das beim Schweißen eine Sauerstoffquelle darstellt. Aufgrund des hohen Anteils an Calcziumfluorid im Flußmittel ist das Schweißen mit dieser Elektrode außerordentlich schwierig. Ähnliches gilt auch für die Elektrode nach der DE-OS 2 164 892, deren Metallfluoridanteil mit 40% bis 80% der Flußmittelmenge sehr hoch ist und die zusätzlich zu dem Metallfluorid auch noch Calziumkarbonat oder ein anderes Metalloxyd aufweist, das als Sauerstoffspender die Qualität der Schweißnaht herabsetzt bzw. eine Schweißbarkeit in Außer-Schweißposition unmöglich macht.

Aufgabe der Erfindung ist es, die genannten Nachteile zu vermeiden und eine Elektrode zum Inertgas-Schweißen oder MIG-Schweißen von insbesondere hochfesten Stählen zu schaffen, mit der es möglich ist, den Anteil an Sauerstoff und diffundierbarem Wasserstoff in der Schweiße auf Werte zu verringern, die den hohen Anforderungen an die Nahtgüte genügen und die auch zum Schweißen in Außer-Schweißposition zufriedenstellend eingesetzt werden kann.

Diese Aufgabe wird mit der Erfindung dadurch gelöst, daß das Flußmittel eine einzige basische, anorganische Masse mit im wesentlichen einzigen Bestandteil Calciumfluorid in einer für den Schmelzfluß ausreichenden Menge ist, die weniger als etwa 1,6 Gew.% bezogen auf das Gesamtgewicht des Schweißelements beträgt und die den Sauerstoffgehalt im Schweißmetall auf weniger als etwa 0,04 % begrenzt.

Mit der Erfindung wird eine basische Metall-Kernelektrode bzw. ein Kernfülldraht oder Zusatzdraht geschaffen, die bzw. der mit Vorteil für das MIG-Schweißen hochfester Stähle mit einer Mindest-Streckgrenze von 690 N/mm² verwendbar ist. Selbst Stähle mit einer Streckgrenze von über 890 N/mm² können mit der erfindungsgemäßen Elektrode zufriedenstellend geschweißt werden. Dabei kann die erfindungsgemäße, basische Metall-Kernelektrode, wie erwähnt, für das Schweißen außerhalb der Normalposition eingesetzt werden, da das Calciumfluorid in einer genau eingestellten begrenzten Maximalmenge unterhalb 1,6 Gew.% liegt und den einzigen Flußmittelbestandteil der Elektrode bildet. Diese Menge an Calciumfluorid reicht aus, um den Sauerstoffgehalt im Schweißmetall zu minimieren und damit dessen Einfluß auf die Schlagfestigkeit der entstehenden Schweiße zu unterdrücken. Da zusätzliche Mengen an Calciumfluorid in der Elektrode nicht benötigt werden, um weitere Flußmittelbestandteile eines Mehrkomponenten-Flußmittelsystems auszugleichen, läßt sich die Elektrode mit Vorteil beim Impuls-Schweißen auch bei jeder Schweißposition außerhalb der Normalposition in der gleichen Art und Weise einsetzen wie die beim MIG-Schweißen hochfester Metalle sonst verwendeten Massivdrahtelektroden.

Die mit der erfindungsgemäßen basischen Metall-Kernelektrode erreichbaren Abschmelzleistungen liegen erheblich oberhalb 2,25 kg/h, wodurch eine kleinere Anzahl an Schweißdurchgängen bzw. Schweißlagen erforderlich ist und eine gegenüber dem Schweißen mit einem Massivdraht im wesentlichen verdoppelte Schweißraupe bzw. Schweißnaht erreichbar ist, wobei lediglich kleine Schlackeninseln auf der Oberfläche der Schweißraupe bzw. Schweißnaht auftreten.

In bevorzugter Ausgestaltung der Erfindung beträgt der Anteil an Calciumfluorid im Kernmaterial etwa 0,1% bis etwa 0,9% des Elektrodengesamtgewichts. Schon mit diesem niedrigen Prozentanteil des Flußmittels, nämlich des Calciumfluorids, werden die oben erörterten Schweißprobleme der Flußmittel-Kernelektroden behoben, wobei das Calciumfluorid zugleich die Menge des im entstehenden Schweißmetall enthaltenen Sauerstoffs kontrolliert. Da Fluor im Schweißlichtbogen einen Pinch-Effekt bewirkt, der eine Spritzerwirkung und Schlackenbestandteile im Metall bei abnehmender Schweißgeschwindigkeit beim Impuls-Schweißen außerhalb der Normal-Schweißposition zur Folge hat, ergibt sich bei Begrenzung des Calciumfluorids in der Elektrode auf höchstens etwa 0,9% des Elektrodengewichts darüber hinaus ein Anstieg in der Qualität der entstehenden Schweiße.

Die Begrenzung des Calciumfluorids auf dem oberen Prozentanteil in der erfindungsgemäßen Elektrode begrenzt auch das Fluor, das aus dem Calciumfluorid zur Verwendung im Schweißmetall verfügbar ist. Da Fluor ein Mittel zur Herabsetzung des diffundierbaren Wasserstoffs ist, der beim Schweißen von hochfesten Stählen zur Schweißrissigkeit führt, sieht die Erfindung in weiterer bevorzugter Ausgestaltung vor, daß das Kernmaterial ein Mittel zur Herabsetzung der Menge des diffundierbaren Wasserstoffs im Schweißmetall enthält, das aus einem fluorhaltigen Polymer, elementaren Zinkpulver, einer pulvrigen Zinklegierung oder aus einer Kombination aus den vorgenannten Stoffen besteht. Das fluorhaltige Polymer weist einen Schmelzpunkt unterhalb etwa 535° C auf, so daß es in körniger Form in das Kernmaterial eingebracht werden kann und seine Zusammensetzung während der Ausformung und des Ziehens der Elektrode beibehält. Dieses Mittel setzt Fluor frei, der während des Lichtbogenschweißens den diffundierbaren Wasserstoff im Schweißmetall einfängt bzw. aufnimmt. Das Zinkpulver kann ebenfalls in genau eingestellten Mengen in das Kernmaterial der Elektrode eingebracht werden. Diese Mittel mit den Wasserstoffgehalt verminderndem Effekt bzw. mit Wasserstoffreinigungseffekt lassen sich bei massiven Metalldrahtelektroden nicht einsetzen. Das Polymer würde hier bei dem für die Herstellung des Massivdrahtes erforderlichen Schmelz- oder Legierungsprozeß aufgezehrt werden. Zinkpulver würde entsprechend seine Wirksamkeit verlieren.
Das Kernmaterial enthält zweckmäßig weniger als etwa 0,3% des genannten wasserstoffreduzierenden Mittels, bezogen auf das Gesamtgewicht des Schweißelementes. Dabei kann der Anteil des diffundierbaren Wasserstoffs im Schweißmetall weniger als etwa 2 ml pro 100 g betragen.

Das Kernmaterial enthält vorzugsweise pulverförmige Metallegierungsstoffe, wobei zweckmäßig die Legierungsstoffe und der Stahlmantel zusammen Kohlenstoff in einer Menge enthalten, die, bezogen auf das Gesamtgewicht des Schweißelementes, unterhalb etwa 0,1% liegt. Der das Kernmaterial umschließende, niedrig gekohlte Stahlmantel läßt sich zu einer Elektrode ausziehen, deren Durchmesser kleiner ist als 2,54 mm. Selbstverständlich ist es auch vorstellbar, daß der Mantel der Elektrode in einem elektrischen Legierungsofen gebildet wird, um die Notwendigkeit zu vermeiden, das Legierungsmetall in Pulverform in das Kernmaterial der aufzehrbaren Elektrode einzubringen. In jedem Fall wird mit der Erfindung eine basische Metall-Kernelektrode (Seelenelektrode) mit einem einzigen Flußmittelbestandteil geschaffen, der 100% basisch und im wesentlichen inert ist und mit einem Wasserstoffreinigungsmittel. Ob dabei die Legierungsstoffe, die bevorzugt aus Mangan, Silicium, Molybdän, Nickel und Titan bestehen, sich in genauer Einstellung im Metallmantel oder als Metallegierungspulver im Kernmaterial befinden, ist nicht entscheidend. Das Einbringen der Legierungsstoffe läßt sich unter Anwendung der üblichen Legierungstechnologie durchführen. Besonders zweckmäßig ist es aber, wenn die Legierungssmetalle im Kernmaterial vorgesehen werden.

Die erfindungsgemäße Elektrode enthält kein Flußmittelsystem, wie z.B. ein herkömmliches TiO₂-System oder ein basisches Flußmittelsystem. Die Bezeichnung "System" bedeutet, daß zwei oder mehr Flußmittelbestandteile vorhanden sind, die im Zusammenwirken die Flußmittelwirkung haben. Nach der Erfindung wirkt das Calciumfluorid mit keinem anderen Flußmittel zusammen, sondern es bildet für sich selbst das Flußmittel. Dabei ist die Menge an Calciumfluorid auf ein Niveau unterhalb etwa 1,6% und vorzugsweise unterhalb 0,09%, bezogen auf das Gesamtgewicht der Elektrode, reduziert. Bei dieser geringen Menge an Calziumfluorid begrenzt dieses den Sauerstoff im Schweißmetall ohne Beeinträchtigung des Schweißbetriebes und ohne die Möglichkeit zu nehmen, außerhalb der normalen Schweißposition zu arbeiten, wie dies sonst mit einer Flußmittel-Kernelektrode der Fall ist, die einen größeren Anteil an Calciumfluorid aufweist. Das Calciumfluorid kann selbst unter die Obergrenze von 1,6% bis auf etwa 0,2% herabgesetzt werden, ohne den Schweißvorgang nachteilig zu beeinflussen.

Die Erfindung ist in ihrer praktischen Ausführung auf eine basische Metall-Kernelektrode gerichtet und demgemäß befinden sich Legierungsmetalle für das Schweißmetall in Pulverform und in verdichteter Form im Kern. Selbstverständlich ist es auch denkbar, daß die Legierungsstoffe in dem umgebenden Elektrodenmantel enthalten sein können, falls hier in der Legierung des Stahlmantels mit hinreichender metallurgischer Genauigkeit gearbeitet werden kann. In bevorzugter Ausführung der Erfindung und für deren bevorzugte praktische Ausgestaltung ist ein den Kern umschließender niedrig gekohlter bzw. niedrig legierter Stahlmantel vorgesehen, wobei die Legierungsmetalle sich in Pulverform im Kern befinden. Die Elektrode wird auf die gewünschte Größe gezogen, vorzugsweise zu einer Zylinderelektrode mit einem Durchmesser unterhalb 2,54 mm. Dieser gezogene Fülldraht nach der Erfindung ist mit allen Vorteilen einer Kernelektrode und gleichzeitig mit den Vorteilen der Massivdrahtelektroden für das MIG-Schweißen verwendbar. Aufgrund der Verwendung eines einzigen basischen Bestandteiles in geringen Mengenanteilen im Kern zusammen mit dem den Wasserstoff herabsetzenden Mittel werden der Sauerstoff und der Wasserstoff im Schweißmetall reduziert. Die erfindungsgemäße Schweißelektrode kann mit besonderem Vorteil für das Schweißen hochfester Stähle bzw. von Stählen mit hoher Streckgrenze eingesetzt werden, wie vor allem einem Stahl mit einer Mindeststreckgrenze von 690 N/mm² (HY-100) und selbst für Stähle mit einer Streckgrenze von über 890 N/mm² (HY-130) verwendet werden. Die erfindungsgemäße Elektrode läßt sich im wesentlichen in der selben Weise wie die massiven Drahtelektroden beim MIG-Schweißen einsetzen, und zwar auch beim Schweißen außerhalb der Normal-Position und/oder beim Impuls-Schweißen. Die Vorteile einer Kernelektrode verbinden sich mit den Vorteilen einer massiven Drahtelektrode.

Aus der Vergangenheit kennt man Metall-Kernelektroden und basische Flußmittel-Kernelektroden. Diese beiden Elektroden sind aber niemals als Ersatz für einen massiven Metalldraht beim MIG-Schweißen hochfester Stähle, wie sie z.B. bei Marine-Fahrzeugen oder im sonstigen militärischen oder handelsüblichen Bereichen eingesetzt werden, in Betracht gezogen werden. Außerdem sind diese basischen Flußmittel-Kernelektroden nicht für das Schweißen außerhalb der Normalposition verwendbar. Sie weisen einen engeren Anwendungsbereich und niedrige Abschmelzleistungen auf, die unterhalb 2,25 kg/h liegen. Mit der vorliegenden Erfindung wird dagegen eine Kernelektrode geschaffen, die eine Kombination aus Metall und basischem Material darstellt und die für die angegebenen Zwecke verwendbar ist. Die nicht-metallischen Bestandteile im Kernmaterial sind hierbei auf Calciumfluorid und das fluorhaltige Polymer als ein Wasserstoff entfernendes Mittel, falls dieses ausgewählt wird, beschränkt. Es sind keine weiteren nicht-metallischen Stoffe vorhanden, die ein Gesamt-Flußmittelsystem bilden, wie dies normalerweise der Fall ist.

Es hat sich gezeigt, daß eine basische Metall-Kernelektrode nach der Erfindung, wie sie vorstehend beschrieben ist, für das Schweißen hochfester Stähle mit besonderen Vorteilen eingesetzt und hierbei das gebräuchliche Elektrodenmaterial aus einem massiven Schweißdraht ersetzen kann. Um eine Kernelektrode mit noch weiter verbesserten Eigenschaften zu erreichen, ist erfindungsgemäß ein Bestandteil zur Herabsetzung des diffundierbaren Wasserstoffs des Schweißmetalls vorgesehen. Es wird angenommen, daß der Wasserstoff von der Feuchtigkeit herrührt, die durch Kapillarwirkung oder auf andere Weise in die Naht des den Elektrodenkern umhüllenden Mantels eindringt. Die Neigung zur Rißbildung erhöht sich mit der Zunahme der Streckfestigkeit des zu schweißenden Grundmetalls. Mit zunehmender Festigkeit nimmt daher die Menge an Wasserstoff, die im Schweißmetall noch toleriert werden kann, ab. Der Wasserstoff geht mit im Kernmaterial enthaltenen Verunreinigungen, mit etwaigen an der Elektrode anhaftenden Schmierstoffen und mit von der Elektrodenherstellung herrührenden Streckfetten u.dgl. in das Schweißmetall. Die militärischen Spezifikationen verlangen weniger als 2 ml/100 g beim Schweißen unter Raumtemperatur für einen Stahl im Bereich von 565 bis 607 N/mm² (82.000 bis 88.000 psi). Um dieser Forderung zu entsprechen, werden die verwendeten massiven Drähte nach ihrer Herstellung gereinigt. Diese Reinigung vermindert die Eignung des Drahtvorschubs unter Einhaltung der Vorschriften. Eine Erhitzung des Basismetalls führt zu einem Austreiben der Feuchtigkeit von dessen Oberfläche. Das Erhitzen vor dem Schweißvorgang stellt demgemäß einen anderen Weg zur Begrenzung des Wasserstoffs im Schweißmetall dar. Zu demselben Zweck werden von einigen Herstellern nahtlose Röhrchen für die Kernelektroden vorgesehen, um zu vermeiden, daß Feuchtigkeit durch die Naht des Röhrchens in das Kernmaterial eindringt. Welche Maßnahmen auch immer getroffen werden, Wasserstoff ist stets im Schweißmetall anwesend. Der Wasserstoff hat seinen Ursprung aus der Feuchtigkeit im Schutzgas und an der Oberfläche der zu verschweißenden Grundmetalle oder als in den Verbindungsbereich der Grundmetalle eingedrungener Wasserstoff. Es bestehen andere Wasserstoffquellen, wodurch die Möglichkeit zur Eleminierung des Wasserstoffs, der schon in kleinen Mengen bei hochfesten Stählen mit Festigkeiten oberhalb 550 N/mm² (80.000 psi) Probleme schafft, zusätzlich kompliziert wird. Mit der vorliegenden Erfindung ist es möglich, die stets anwesenden, unerwünschten kleinen Wasserstoffmengen zu tolerieren und deren Auswirkung durch eine neue Formulierung der Elektrode zu unterbinden. Da die Menge an Calciumfluorid verhältnismäßig klein ist, steht auch nur eine kleine Fluormenge zur Verminderung des diffundierbaren Wasserstoffs zur Verfügung. Die Menge an Wasserstoff muß bei hochfesten Stählen, wie dem Stahl HY-100, unterhalb 2 ml/100g, insbesondere beim Schweißen unter Raumtemperatur, liegen. Mit der Erfindung läßt sich diese Forderung durch Verwendung des Calciumfluorids in der begrenzten Menge erfüllen. Es ist aber höchst wünschenswert, den Wasserstoff noch unter die 2 ml/100 g-Grenze zu senken, die durch die Militär-Spezifikation als Bedingung für das Hochfestigkeitsschweißen gegeben ist. Dies kann nach der Erfindung dadurch bewirkt werden, daß ein wasserstoffreduzierendes Mittel in der Elektrode vorgesehen wird. Ein solches Mittel ist das oben erwähnte fluorhaltige Polymer, wie z.B. in Gestalt eines Fluorkohlenstoffs. Dieses Mittel setzt Fluor frei, der sich mit dem diffundierbaren Wasserstoff kombiniert. Es ist bei Temperaturen, wie sie bei der Elektrodenherstellung auftreten, fest. Dies läßt sich dadurch erreichen, daß ein Polymer verwendet wird, welches Temperaturen von etwa 530°C (1000°F) standhält. Das Mittel des Polymertyps muß sich zu feinem Pulver verarbeiten lassen, das sich mit dem Metallpulver und dem Calciumfluoridpulver mischen läßt. Es muß außerdem schmelzend, nicht hygroskopisch und auch sonst inert sein. Selbstverständlich können in dem Polymer weder Wasserstoffatome noch Stickstoffatome enthalten sein. Bei dem bevorzugten Ausführungsbeispiel wird das obengenannte Mittel des Polymer-Typs zusammen mit Calciumfluoridpulver verwendet, um ein System zu bilden, das mit den Metallegierungspulvern im Kern der Elektrode kombiniert wird. Das Fluor aus dem kleinen Calciumfluoridanteil unterstützt die Wasserstoffentfernung. Das fluorhaltige Polymer vermindert die Wasserstoffmenge noch weiter, so daß im Ergebnis die Wasserstoffmenge im Schweißmetall deutlich unter 2 ppm liegt. Wie bekannt, ist der Wasserstoff in seiner einatomigen Form hauptsächlich der schädliche Bestandteil, der die Rißbildung im Schweißmetall bewirkt. Die Kombination des Wasserstoffs mir Fluor setzt diese Form des freien Wasserstoffs herab. Zusätzlich schließt sich der einatomige Wasserstoff zu einem Wasserstoffmolekül zusammen, das die Rißeigenschaften des Schweißmetalls nicht ernsthaft beeinträchtigt. Demgemäß setzt das Fluor die Neigung zur Schweißrissigkeit des Schweißmetalls herab. Diese deutliche Verminderung des diffundierbaren Wasserstoffs ist von besonderer positiver Bedeutung, wenn, wie bei einem HY-130-Stahl, die Kerbzähigkeit ein Problem darstellt.

Nach einem anderen Aspekt der Efindung kann auch Zinkmetallpulver als Mittel zur Herabsetzung der Menge an diffundierbarem Wasserstoff im Schweißmetall verwendet werden. Obgleich nicht genau bekannt ist, wie in diesem Fall die Wasserstoffreduktion erreicht wird, kann angenommen werden, daß das Zinkmetallpulver Taschen o. dgl. bildet, in denen sich diffundierbarer Wasserstoff unter Bildung von molekularem Wasserstoff sammelt. Da Zink bei etwa 906°C schmilzt, kann das Metallpulver mit dem Kernmaterial der Elektrode kombiniert werden, wenn diese in herkömmlicher Weise hergestellt wird. Es könnte in dieser Form nicht in einer massiven Drahtelektrode verwendet werden, da diese bei erheblich höheren Temperaturen legiert wird.

Mit der Erfindung wird eine basische Metall-Kernelektrode erhalten, die die Standard-Massivdrahtelektrode, wie sie beim MIG-Schweißen hochfester Stähle eingesetzt wird, ersetzen kann. Es versteht sich, daß die Erfindung auch als Fülldraht bzw. Zusatzdraht bei dem bekannten TIG-Schweißen (Tungsten-Inert-Gas-Schweißen) verwendet werden kann.

Die Erfindung wird nachfolgend im Zusammenhang mit den in der Zeichnung gezeigten Ausführungsbeispielen näher erläutert. In der Zeichnung zeigen:
- Figur 1: in schematischer Querschnittsdarstellung eine basische Metall-Kernelektrode gemäß der Erfindung;
- Figur 2: in der Darstellung der Fig. 1 eine Modifikation der Elektrode gemäß der bevorzugten Ausführungsform;
- Figur 3: ein Diagramm, welches die Abhängigkeit zwischen der basischen Masse der Elektrode und dem Schweißmetall-Sauerstoffgehalt zeigt;
- Figur 4: ein Diagramm, welches die Abhängigkeit zwischen dem Prozentgehalt eines fluorhaltigen Polymers an dem gesamten Elektrodengewicht und der Konzentration von diffundierbarem Wasserstoff im Schweißmetall wiedergibt;
- Figur 5: eine graphische Darstellung, die die Abhängigkeit zwischen dem Prozentgehalt an pulvrigem Zink, bezogen auf das Gesamtgewicht der Elektrode und der Konzentration an diffundierbarem Wasserstoff im Schweißmetall wiedergibt.

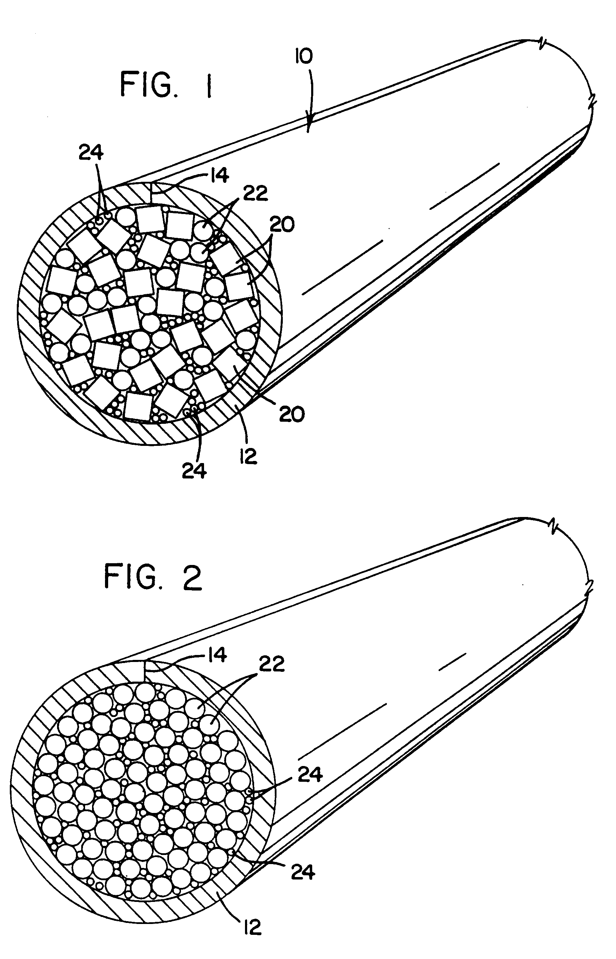

Die Zeichnung zeigt ein bevorzugtes Ausführungsbeispiel der Erfindung, das im Zusammenhang mit einem einzigen Beispiel erläutert wird. Bei diesem Beispiel werden zwei Platten oder Bleche von 25,4 mm Dicke unter Verwendung eines zu 98 % aus Argon und zu 2 % aus Sauerstoff bestehen-Schutzgases mit einer Wärmezufuhr von 55 bis 100 Kilojoules/25,4 mm mit Vorerwärmen der Bleche auf eine Temperatur von 121°C verschweißt.Die Bleche bestehen aus solchen hoher Streckgrenze, nämlich einem Militär-Stahl HY-100. Zur Verschweißung wurde eine basische Metall-Kernelektrode 10 verwendet, die einen Stahlmantel 12 mit niedrigem Kohlenstoffgehalt und mit einer Verbindungsnaht 14 aufweist, wie dies in Fig. 1 schematisch gezeigt ist.

Die Naht 14 des Mantels 12 kann als Überlappungsnaht oder in anderer Weise entsprechend der bei der Herstellung von Schweißelektroden 10 gängigen Praxis hergestellt werden. Im Inneren der Umhüllung bzw. des Mantels 12 befindet sich ein kompakter bzw. verdichteter Kern, bestehend aus Partikeln 20 eines Legierungsmaterials (gezeigt als Quadrate), aus Calciumfluoridpartikeln 22 (gezeigt als große Kreise) und in kleiner Menge aus Partikeln eines fluorhaltigen Polymers 24 (dargestellt als kleine Kreise).

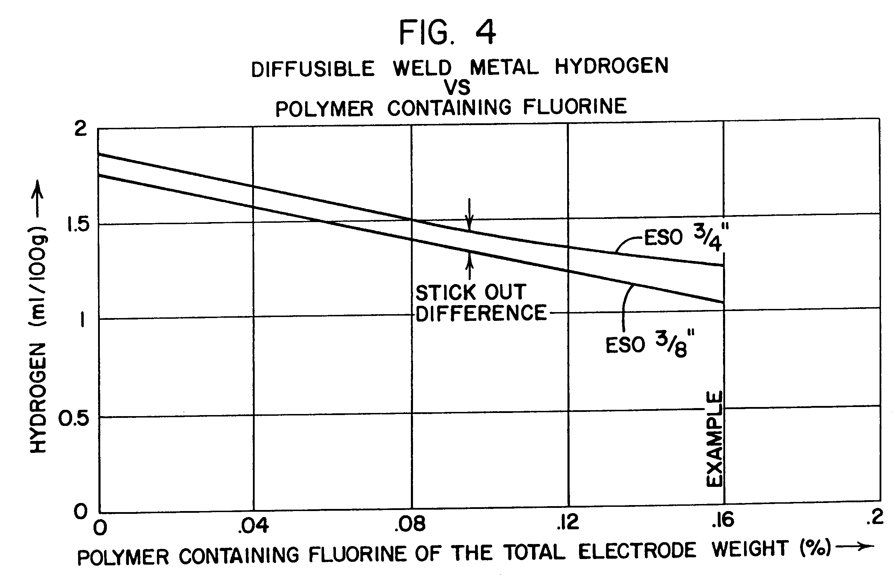

Dieser Kern wird durch Streckziehen der Elektrode 10 auf einen Durchmesser unterhalb 2,54 mm verdichtet. Im gezeigten Beispiel beträgt die Menge des fluorhaltigen Polymers 0,16 % des Elektrodengesamtgewichts (vgl. Fig. 4). Der Prozentanteil der Calciumfluoridpartikel am Elektrodengesamtgewicht beträgt 0,5 %. Die Metallegierungspartikel 20 sind in einem Prozentanteil von etwa 19 % des Elektrodengesamtgewichts im Kernmaterial enthalten. Das verbleibende Gewicht ist dasjenige des Mantels bzw. Röhrchens 12. Mit diesem Beispiel der Elektrode läßt sich eine zufriedenstellende Schweißung eines hochfesten Militär-Stahls, wie z.B. eines solchen der Klassifikation HY-100, erreichen.

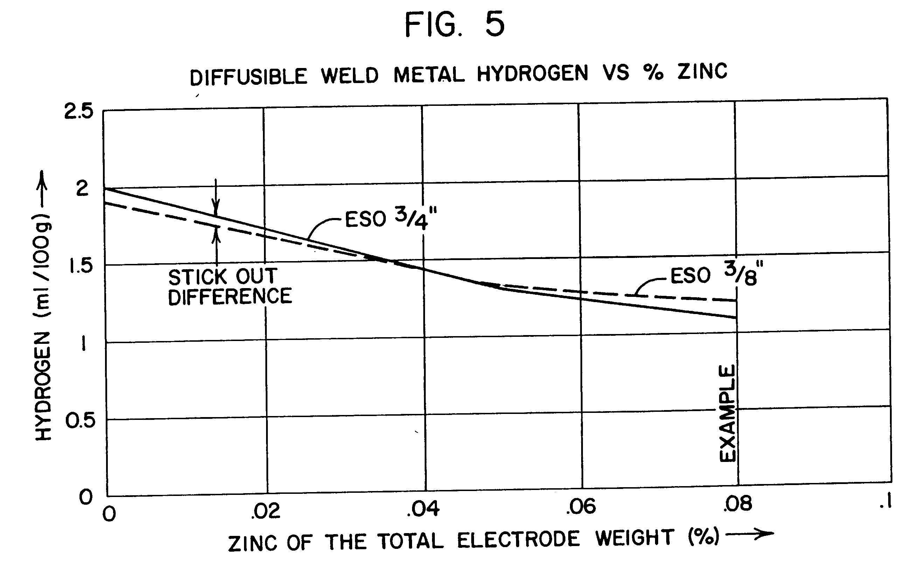

Bei einem anderen Ausführungsbeispiel der Erfindung bestehen die Partikel 24 aus Zinkpulver (vgl. Fig. 5). Bei diesem Beispiel ist die Menge an Calciumfluorid ebenfalls 0,5 % des Elektrodengesamtgewichts, während die Menge an Zinkpartikeln 0,08 % des Elektrodengesamtgewichts ausmacht. Die Legierungspulver bzw. Legierungspartikel 20 betragen auch hier etwa 19 % des Elektrodengesamtgewichts. Das Restgewicht der Elektrode ist dasjenige des Mantels 12.

Fig. 2 zeigt eine Modifikation des bevorzugten Ausführungsbeispiels der Erfindung, bei der der im Inneren des Mantels 12 befindliche Kern lediglich Calciumfluoridpulver 22 und pulvriges wasserstoffreduzierendes Mittel 24 umfaßt. Bei dieser Ausführungsform befinden sich die Legierungsbestandteile in dem den Mantel 12 bildenden Metall. Die verschiedenen Zusammensetzungen der Legierungsstoffe sind nicht Teil der Erfindung; sie lassen sich unterschiedlich einstellen, ohne den Rahmen der Erfindung zu verlassen, die sich insoweit nur auf das Konzept eines im wesentlichen einzigen Flußmittelbestandteils, d.h. des Calciumfluorids,zusammen mit dem bevorzugt im Kern befindlichen Legierungspulver und dem Zusatz eines den Wasserstoff vermindernden Mittels zu dem Kernmaterial bezieht.

Die Auswahl des Legierungsmittels erfolgt für den jeweiligen Schweißvorgang nach den bekannten Gesichtspunkten.

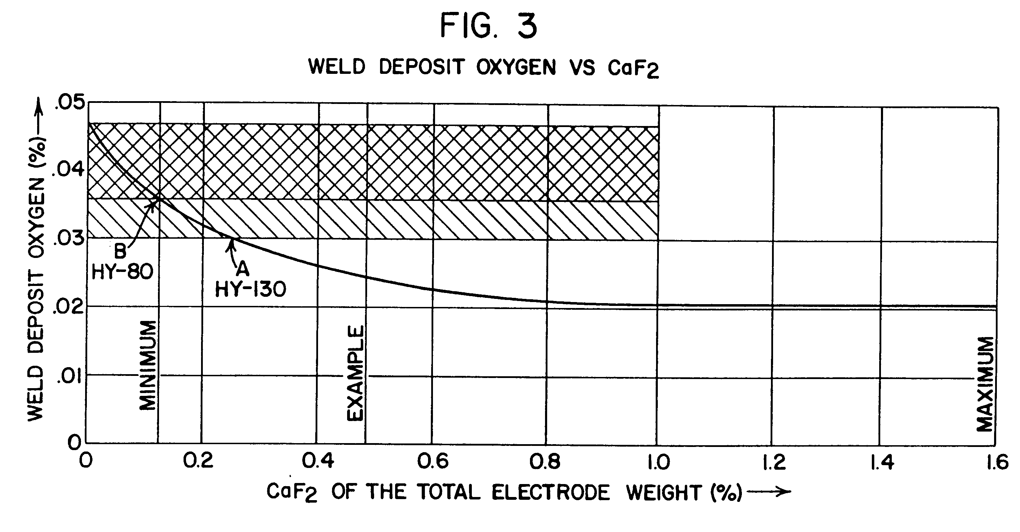

Wie das Diagramm nach Fig. 3 zeigt, beträgt die Menge an Calciumfluoridpartikeln im Kern weniger als etwa 1,6 % des Elektrodengesamtgewichts. Bei oder im Bereich einer Calciumfluorid-Menge von 1 % liegt der Punkt,an dem die Schweißgüte beginnt, ihre Eignung zu verlieren.Ein Wert über etwa 1,6 % ergibt eine Schweißelektrode, die für den Gebrauch beim Schweißen von Stählen hoher Streckgrenze in den verschiedenen Schweißpositionen nicht zufriedenstellt. Mit abnehmendem Calciumfluoridgehalt erhöht sich die Sauerstoffmenge in der Ausschweißung bzw. in der Schweißablagerung. Mit zunehmender Streckgrenze des hochfesten Stahls kann eine kleinere Sauerstoffmenge im Schweißmetall enthalten sein, um den militärischen Spezifikationen zu entsprechen und eine akzeptable Schlagfestigkeit zu erzielen. Für einen hochfesten Stahl in höherem Bereich, wie HY-130, muß die im Schweißmetall befindliche Sauerstoffmenge kleiner sein als für einen hochfesten Stahl der Güteklasse HY-80. Demgemäß liegt der Mindestgehalt an Calciumfluorid für einen HY-130-Stahl in der Kurve gemäß Fig. 3 bei A. Für einen hochfesten Stahl geringerer Festigkeit, wie einem HY-80-Stahl, kann der Sauerstoffgehalt im Schweißmetall geringfügig höher liegen. Dies ist in der graphischen Darstellung durch die Position B angegeben. Die Mindestgrenze an Calciumfluorid schwankt demgemäß nach Maßgabe der Streckgrenze bzw. Streckfestigkeit des hochfesten Stahls, für den die Erfindung speziell anwendbar ist. In allen Fällen weist die Schweißmetallegierung einen niedrigen Sauerstoffgehalt auf, der für das Schweißen hochfester Stähle erforderlich ist. Die Möglichkeit für einen höheren Sauerstoffgehalt ist in Fig. 3 lediglich zum Zwecke der Beschreibung der Erfindung gezeigt, die im übrigen die für die praktische Verwendung der Erfindung erforderlichen Mindestgrenzen für das Calciumfluorid wiedergibt.

Die graphischeDarstellung nach Fig. 4 zeigt die Abhängigkeit des Prozentanteils an fluorhaltigem Polymer gegenüber dem diffundierbaren Wasserstoff, der sich im Schweißmetall findet. Der Anteil an Wasserstoff ist hier dargestellt durch den Parameter ml/100 g, der in direkter Beziehung zu ppm steht. In der Praxis sollten hochstreckfeste Stähle einen Gehalt an diffundierbarem Wasserstoff unterhalb 2,0 ppm aufweisen. Es ist ersichtlich, daß sich dies durch die Zugabe von Calciumfluoridpulver zusammen mit Metallegierungspulvern selbst ohne Zusatz eines wasserstoffreduzierenden Mittels erreichen läßt. Nach einem Aspekt der Erfindung wird aber ein solches den Wasserstoffgehalt verminderndes Mittel zugesetzt, um den Wasserstoffgehalt im Schweißmetall noch weiter herabzusetzen. Durch Zugabe von 0,16 % eines fluorhaltigen Polymers entsprechend dem ersten Ausführungsbeispiel ergibt sich mit dieser kleinen Menge des Mittels eine beträchtliche Wasserstoffverminderung im Schweißmetall. Bei dem bevorzugten Ausführungsbeispiel der Erfindung und nach einem wesentlichen Aspekt der Erfindung wird demgemäß ein solches wasserstoffreduzierendes Mittel verwendet, um die Menge an schädlichem diffundierbarem Wasserstoff im Schweißmetall herabzusetzen. Die obere Kurve in Fig. 4 repräsentiert einen elektrischen Elektrodenüberstand von 9,4 mm,die untere Kurve einen elektrischen Elektrodenüberstand von 19,5 mm.Es ist erkennbar, daß Durch die Zugabe des genannten Mittels zu dem Kern der Elektrode 10 die Empfindlichkeit des Elektrodenüberstandes in Bezug auf den Wasserstoff sehr gering ist. Dies stellt einen wesentlichen Vorteil gegenüber anderen Maßnahmen zur Minimierung des diffundierbaren Wasserstoffs auf diese geringen Anteile dar.

Die geringe Empfindlichkeit bezüglich des Elektrodenüberstandes läßt sich noch deutlicher der Fig. 5 entnehmen, bei der Zinkpulver als Mittel zur Herabsetzung der Menge an schädlichem Wasserstoff im Schweißmetall von 2,0 ppm auf etwa 1,2 ppm verwendet wird (zweites Beispiel). Dieser Effekt ist mit einer geringen Zinkmenge von etwa 0,08 % des Elektrodengewichts erreichbar. Es ist erkennbar, daß eine Kombination des in Fig. 4 die Abszisse bildenden Materials und des in Fig.5 die Abszisse bildenden Materials zur Herabsetzung des Wasserstoffs vorgesehen werden könnte. Weniger als 0.16 % eines solchen Mittels kann nach der Erfindung ausreichen.

## Patentansprüche

1. Abschmelzendes Schweißelement zum Lichtbogenschweißen, insbesondere von hochfesten Metallen, mit einem Stahlmantel, der ein verdichtetes Kernmaterial umschließt, das ein Flußmittel enthält, **dadurch gekennzeichnet, daß** das Flußmittel eine einzige basische, anorganische Masse mit im wesentlichen einzigen Bestandteil Calciumfluorid in einer für den Schmelzfluß ausreichenden Menge ist, die weniger als etwa 1,6 Gew.% bezogen auf das Gesamtgewicht des Schweißelementes beträgt und die den Sauerstoffgehalt im Schweißmetall auf weniger als etwa 0,04% begrenzt.

2. Schweißelement nach Anspruch 1, **dadurch gekennzeichnet, daß** das Kernmaterial zwischen etwa 0,1% und etwa 0,9% Calciumfluorid, bezogen auf das Gesamtgewicht des Schweißelementes, enthält.

3. Schweißelement nach Anspruch 1 oder 2, **dadurch gekennzeichnet, daß** das Kernmaterial ein Mittel zur Herabsetzung der Menge des diffundierbaren Wasserstoffs im Schweißmetall enthält, das aus einem fluorhaltigen Polymer, elementarem Zinkpulver, einer pulvrigen Zinklegierung oder aus einer Kombination aus den vorgenannten Stoffen besteht.

4. Schweißelement nach Anspruch 3, **dadurch gekennzeichnet, daß** das Kernmaterial, bezogen auf das Gesamtgewicht des Schweißelementes, weniger als etwa 0,30% des genannten wasserstoffreduzierenden Mittels enthält,

5. Schweißelement nach Anspruch 3 oder 4, **dadurch gekennzeichnet, daß** der diffundierbare Wasserstoff im Schweißmetall weniger als etwa 2 ml/100g Schweißmetall beträgt.

6. Schweißelement nach einem der Ansprüche 1 bis 5, **dadurch gekennzeichnet, daß** das Kernmaterial pulverförmige Metallegierungsstoffe enthält.

7. Schweißelement nach Anspruch 6, **dadurch gekennzeichnet, daß** die Legierungsstoffe und der Stahlmantel zusammen Kohlenstoff in einer Menge enthalten, die, bezogen auf das Gesamtgewicht des Schweißelementes, unterhalb etwa 0,1% liegt.

8. Schweißelement nach Anspruch 6 oder 7, **dadurch gekennzeichnet, daß** die Legierungsstoffe und der Stahlmantel gemeinsam zumindest Mangan, Silicium, Molybdän, Nickel und Titan enthalten.

9. Schweißelement nach einem der Ansprüche 1 bis 8, **dadurch gekennzeichnet, daß** der Mantel einen Außendurchmesser aufweist, der kleiner ist als etwa 2,54 mm.

## Claims

1. Melting welding element for arc welding, in particular of high-strength metals, with a steel shell which surrounds a compacted core material containing a flux, characterized in that the flux is a single basic, inorganic mass with essentially the sole constituent being a calcium fluoride in a quantity sufficient for melt flow, which is less than about 1.6 % by weight, relative to the total weight of the welding element, and limits the oxygen content in the weld metal to less than about 0.04 %.

2. Welding element according to Claim 1, characterized in that the core material contains between about 0.1 % and about 0.9 % of calcium fluoride, relative to the total weight of the welding element.

3. Welding element according to Claim 1 or 2, characterized in that the core material contains an agent for reducing the quantity of diffusable hydrogen in the weld metal, which agent consists of a fluorinated polymer, elemental zinc powder, a pulverulent zinc alloy or of a combination of the abovementioned substances.

4. Welding element according to Claim 3, characterized in that the core material contains less than about 0.30 % of the said hydrogen-reducing agent, relative to the total weight of the welding element.

5. Welding element according to Claim 3 or 4, characterized in that the diffusable hydrogen in the weld metal amounts to less than about 2 ml/100 g of weld metal.

6. Welding element according to one of Claims 1 to 5, characterized in that the core material contains pulverulent metal alloy substances.

7. Welding element according to Claim 6, characterized in that the alloy substances and the steel shell together contain carbon in a quantity which is below about 0.1 %, relative to the total weight of the welding element.

8. Welding element according to Claim 6 or 7, characterized in that the alloy substances and the steel shell together contain at least manganese, silicon, molybdenum, nickel and titanium.

9. Welding element according to one of Claims 1 to 8, characterized in that the shell has an external diameter which is less than about 2.54 mm.

## Revendications

1. Elément de soudage fusible, destiné au soudage à l'arc électrique, en particulier de métaux à résistance élevée, avec une enveloppe en acier, enclosant un matériau de noyau compacté contenant un fondant caractérisé en ce que le fondant est une masse unique, basique, inorganique, avec comme composant principal unique du fluorure de calcium en une quantité suffisante pour la matière en fusion, inférieure à environ 1,6 % en poids par rapport au poids total de l'élément de soudage et limitant la teneur en oxygène dans le métal à souder à moins d'environ 0,04 %.

2. Elément de soudage selon la revendication 1, caractérisé en ce que le matériau de noyau contient du fluorure de calcium en proportion située entre à peu près 0,1 % et à peu près 0,9 %, par rapport au poids total de l'élément de soudage.

3. Elément de soudage selon la revendication 1 ou 2, caractérisé en ce que le matériau de noyau contient un agent destiné à diminuer la quantité d'hydrogène diffusible dans le métal à souder, composé d'un polymère fluoré, d'une poudre de zinc élémentaire, d'un alliage de zinc se présentant sous forme pulvérulente, ou également d'une combinaison des produits précités.

4. Elément de soudage selon la revendication 3, caractérisé en ce que le matériau de noyau contient moins qu'à peu près 0,30 % du produit réduisant la teneur en hydrogène cité, par rapport au poids total de l'élément de soudage.

5. Elément de soudage selon la revendication 3 ou 4, caractérisé en ce que l'hydrogène diffusible est présent dans le métal à souder, en une proportion inférieure à environ 2 ml/100 g de métal à souder.

6. Elément de soudage selon l'une des revendications 1 à 5, caractérisé en ce que le matériau de noyau contient des produits d'alliages métalliques, sous forme pulvérulente.

7. Elément de soudage selon la revendication 6, caractérisé en ce que les produits d'alliages et l'enveloppe en acier contiennent conjointement du carbone en une quantité inférieure à environ 0,1 %, par rapport au poids total de l'élément de soudage.

8. Elément de soudage selon la revendication 6 ou 7, caractérisé en ce que les produits d'alliages et l'enveloppe en acier contiennent conjointement au moins du manganèse, du silicium, du molybdène, du nickel et du titane.

9. Elément de soudage selon l'une des revendications 1 à 8, caractérisé en ce que l'enveloppe présente un diamètre extérieur inférieur à environ 2,54 mm.
